# EUROPEAN PATENT APPLICATION

(11) **EP 0 697 799 A2**
(43) Date of publication of application: **21.02.1996**
(21) Application number: 95305508.4
(22) Date of filing: 08.08.1995
(51) Int. Cl.: H04Q 7/38

(54) **Code division multiple access communication system**

(30) Priority: 18.08.1994 JP 193460/94
(71) Applicant: MATSUSHITA ELECTRIC INDUSTRIAL CO., LTD., Kadoma-shi, Osaka-fu, 571 (JP)
(72) Inventor: Nakano, Takayuki, Kanazawa-shi, Ishikawa 920-02 (JP); Kato, Osamu, Apt Hiyoshi Nichimo Dai5 Coporasu 205, Yokohama-shi, Kanagawa, 223 (JP); Asano, Nobuo, Yokohama-shi, Kanagawa, 241 (JP)
(74) Representative: Crawford, Andrew Birkby

(57) **Abstract**

A CDMA system in which carriers are segregated according to self-sacrifice of a mobile station and there is no communication quality deterioration due to shadowing is disclosed.

The mobile station detects a base station which became a cause of sudden increase of the power when the reception power of the mobile station suddenly increased, generates a self-sacrifice information and transmits the information to a base station which is possible to be informed. The informed base station detects the self-sacrifice information transmitted from the mobile station and informs to a mobile communication control equipment. The mobile communication control equipment designates a carrier which is prohibited to use hereafter and the base station. The base station concerned determines to prohibit to use the designated carrier.

## Description

### BACKGROUND OF THE INVENTION

### (1)Field of the Invention

The present invention relates to a code division multiple access communication system used in land mobile communication such as mobile telephones and portable telephones and especially to a communication system using a code division multiple access communication system which is a multiple access system for utilizing frequency efficiently.

### (2)Description of the Prior Art

A demand for land mobile communication such as mobile telephones and portable telephones has remarkably increased and efficient frequency utilization technique for keeping a capacity of more subscribers in a limited frequency band has been important. As one of multiple access systems for efficient frequency utilization, attention is paid to a code division multiple access communication system (CDMA system). A CDMA system is a multiple access system utilizing spectrum spread communication technique and is hard to be affected by multipath distortion and can be expected for a diversity effect by a RAKE receiver which combine multipath components in a maximal ratio. A land mobile communication system using a CDMA system is disclosed, for example, in USP no.4,901,307.

USP no.4,901,307 describes a CDMA communication technique in the case in which a plurality of subscribers communicate through base stations. In a CDMA system, a system in which all base stations transmit the same pilot signal in frequency and spread code is well known. In USP no.4,901,307, a pilot signal is used as a reference about initial synchronization, carrier phase offset and carrier frequency offset at a mobile station and reference time of a frame transmitted from a base station. Propagation loss from each base station can be known by detecting the pilot signal.

In a mobile communication system using a CDMA system, when a level of the signal from the mobile station near the base station on the reverse link from the mobile station to the base station is high, there occurs a near-far problem that signals from the other mobile equipments can not be received. Accordingly, it is necessary to control a transmission power of the mobile station so that the base station can receive a signal with the same level from every mobile station. Such a control method of a transmission power is described, for example, in USP no.5,056,109 and 41st Vehicular Technology Conference (May, 1991 pp.57-62).

In a mobile communication system using a CDMA system, it is possible to use the same frequency band between adjacent cells and utilize frequency resources efficiently. When the same frequency is used between adjacent cells, soft handover between cells is possible and it is possible to improve communication quality near a cell boundary. Soft hand over technique is described in USP no.5,101,501.

In a usual CDMA system, however, communication quality is sometimes deteriorated by control delay of a transmission power. Under microcell environment, propagation loss sometimes suddenly varies due to such as shadowing and especially communication quality deterioration occurs in all mobile stations communicating with an adjacent base station for a long time. To solve this problem, there is a method keeping the performance of the entire system by reducing suddenly the transmission power of the mobile station giving some interference and by allowing only communication quality deterioration of the mobile station. But in this case, the mobile station can not execute soft hand over and call drop could occur. As a result, the communication quality of the mobile station remarkably deteriorates for a long time. We call this action of the mobile station which suddenly reduce its own transmission power "self-sacrifice".

### SUMMARY OF THE INVENTION

The present invention solves the problems of usual CDMA systems and aims to offer a CDMA system which can avoid system instability due to influence of shadowing.

To achieve the above object, a CDMA system in accordance with an exemplary embodiment of the present invention includes a mobile station, base stations and a mobile communication control equipment.

The base station includes
self-sacrifice information detection means for detecting a self-sacrifice information coming from the mobile station out of an information which is despreaded the signal from the mobile station and
carrier determination means for determining a carrier to be used at the base station according to the information to prohibit or restrict the use of the carrier designated by the mobile communication control equipment.

The mobile station includes
base station number identification means for detecting the number of the base station by despreading a pilot signal spreades and transmitted from the base station,
self-sacrifice information generation means for generating an information indicating that the mobile station was self-sacrificed according to the base station number which was detected and the reception power and
spread means for spreading a transmission data and the self-sacrifice information.

The mobile communication control equipment generates an information to prohibit or restrict the use of the designated carrier at the base station according to the output of the self-sacrifice information detection means transmitted from the base station.

A CDMA system in accordance with another exemplary embodiment of the present invention also includes a mobile station, a base station and a mobile communication control equipment.

The base station includes
self-sacrifice information detection means for detecting a self-sacrifice information coming from the mobile station out of an information which is despreaded a signal from the mobile station and
carrier determination means for determining a carrier to be used at the base station according to the information to prohibit or restrict the use of the carrier designated by the mobile communication control equipment.

The mobile station includes
self-sacrifice information generation means for generating an information indicating that the mobile station was self-sacrificed according to the quality of the reception data and the reception power; and
spread means for spreading a transmission data and the self-sacrifice information.

The mobile communication control equipment
generates an information to prohibit or restrict the use of the designated carrier at the base station according to the output of the self-sacrifice information detection means transmitted from the base station,
provides with means for transmitting an information which the mobile station sacrificed its own communication quality to the base station and
prohibits or restricts the use of the designated carrier at the communicationg base station.

In a CDMA system having a mobile station and a base station, a driving method of the system includes
a step to reduce the power level of the transmission signal of the mobile station when the reception power at the mobile station suddenly increases,
a step to detect if the pilot signal from the base station which the mobile station is now communicating with increased or not,
a step to judge that the mobile station is in a self-sacrifice state when the pilot signal does not increase and to inform the self-sacrifice information to the base station,
a step to designate a carrier which is prohibited or restricted to use hereafter at the base station and
a step to prohibit or restrict the use of the carrier designated by the base station which is now communicating with the mobile station.

In another CDMA system having a mobile station and a base station, a driving method of the system includes
a step to reduce the power level of the transmission signal of the mobile station when the reception power at the mobile station suddenly increases,
a step to detect if the reception data quality of the mobile station was improved or not,
a step to judge that the mobile station is in a self-sacrifice state when the reception data quality of the mobile station was not improved and to inform the self-sacrifice information to the base station,
a step to designate a carrier which is prohibited or restricted to use hereafter at the base station and
a step to prohibit or restrict the use of the carrier designated by the base station which is now communicating with the mobile station.

According to the CDMA system in accordance with the present invention, it becomes possible to prevent self-sacrifice of a mobile station due to shadowing and remarkable deterioration of communication quality can be avoided. None of all the mobile stations communicating with the base station which the transmission power is not controlled receive interference and the system works more safely. Even when a new shadowing occurs due to buidings and topography variation, it is possible to segregate the carriers according to the variation.

### BRIEF DESCRIPTION OF THE DRAWINGS

FIG. 1 is a block diagram of a mobile station, a base station and a mobile communication control equipment used in a CDMA system in accordance with a first exemplary embodiment of the present invention.

FIG. 2 is a flow chart of a performance of the system in accordance with the first exemplary embodiment of the present invention.

FIG. 3 illustrates examples which a reception power of the mobile station increases by shadowing and reception power characteristics of the mobile station.

FIG. 3a illustrates a situation in which a reception power of the mobile station from one of two base stations is shadowed by an obstacle.

FIG. 3b is a reception power characteristic of the mobile station in the case shown in FIG. 3a.

FIG. 3c illustrates a situation in which a reception power of the mobile station from one base station is shadowed.

FIG. 3d is a reception power characteristic of the mobile station in the case shown in FIG. 3c.

FIG. 4 is a block diagram of a mobile equipment, a base station and a mobile communication control equipment used in a CDMA system in accordance with a second exemplary embodiment of the present invention.

FIG. 5 is a flow chart of a performance of the system in accordance with the second exemplary embodiment of the present invention.

### DETAILED DESCRIPTION OF THE INVENTION

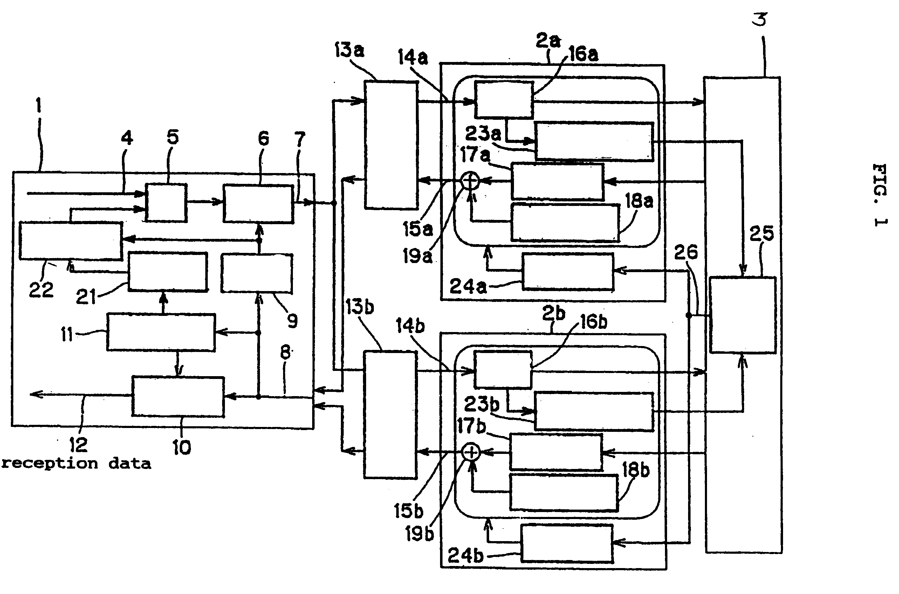

A block diagram of a mobile station, a base station and a mobile communication control equipment used in a CDMA system in accordance with a first exemplary embodiment of the present invention is shown in FIG. 1. The system is composed of a mobile station 1, a plurality of base station 2a and 2b and a mobile communication control equipment 3. In FIG. 1, a case in which mobile station 1 is communicating with two base stations 2a and 2b is considered as an example.

Mobile station 1 includes spread means 5, transmission power control means 6, reception power measurement means 9, data signal despread means 10, pilot signal despread means 11, base station number detection means 21 and self-sacrifice information generation means 22.

Reception power measurement means 9 measures the power of reception signal 8 of mobile station 1 and controls the amplification of transmission power control means 6.

Spread means 5 spreads a transmission data 4 with a spread code allocated to mobile station 1.

Transmission power control means 6 power-amplifies the output of spread means 5, where the amplification is controlled by the output of reception power measurement means 9 and outputs a mobile station transmission signal 7.

Data signal despread means 10 despreads a mobile station reception signal 8 with a spread code allocated to each data channel.

Pilot signal despread means 11 despreads with the spread code, being allocated with mobile station reception signal 8 to each pilot channel.

Base station number detection means 21 detects power levels from base stations 2a and 2b and their identification numbers.

Self-sacrifice information generation means 22 generates a self-sacrifice information.

Because base stations 2a and 2b have the same compositions, only the composition of base station 2a is described as a representation.

Base station 2a includes despread means 16a, data signal spread means 17a, pilot signal generation means 18a, adder means 19a, self-sacrifice information detection means 23a and using carrier determination means 24a.

Despread means 16a despreads a reception signal 14a which is a mobile station transmission signal 7 radiated from mobile station 1 and received through a transmission link 13a.

Data signal spread means 17a spreads the data to transmit from base station 2a to mobile station 1.

Pilot signal generation means 18a generats pilot signals which have the same frequencies and the same spread codes and different phases.

Adder means 19a adds a pilot signal coming from pilot signal generation means 18a on the spread data coming from data signal spread means 17a.

Self-sacrifice information detection means 23a detects a self-sacrifice information transmitted from mobile station 1.

Using carrier determination means 24a determines a carrier used at base atation 2a according to a prohibition-to-use carrier information 26 coming from mobile communication control equpment 3.

Mobile communication control means 3 includes prohibition-to-use carrier information generation means 25 for generating prohibition-to-use carrier for base stations 2a and 2b.

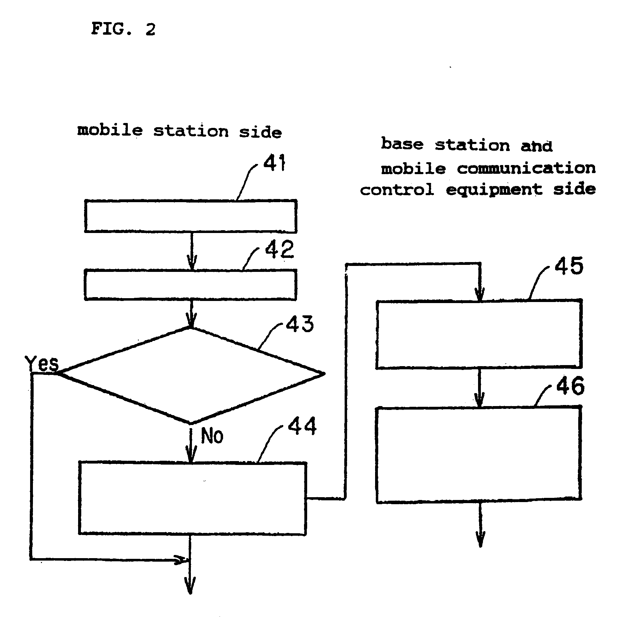

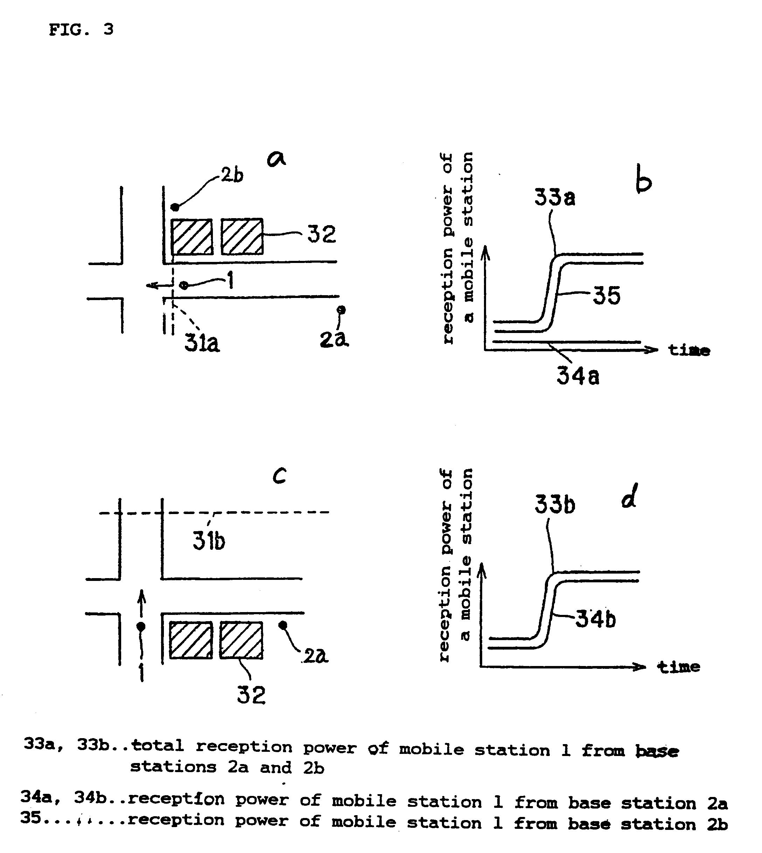

The performance of the CDMA system described above is explained below referring to a flow chart shown in FIG. 2 and illustrations of the reception power variation due to shadowing of mobile station against time shown in FIGs. 3a-3d.

FIG. 3a illustrates a state in which a reception power from one of two base stations is shadowed. FIG. 3c illustrates a state in which a reception power from one base station is shadowed. FIGs. 3b and 3d illustrate reception power of the mobile station against time in the states shown in FIGs. 3a and 3c, respectively.

In FIG. 3a, mobile station 1 is now in a teritory of base station 2a and is in a state in which mobile station 1 is in a shadow of an obstacle 32 (in bad perspective) seeing from base station 2b. The reception power of mobile station 1 in this case is small as shown by curve 34a in FIG. 3b. As soon as mobile station 1 moves beyond cell boundary 31a, however, a propagation loss from base station 2b due to shadowing of obstacle 32 suddenly decreases and the reception power of mobile station 1 suddenly increases as shown by the left side of curve 35 in FIG. 3b. In this case, because mobile station 1 had a increased transmission power before that so that mobile station 1 kept a sufficient quality communication against far base station 2b, mobile station 1 deteriorates communication quality, giving much interference against all mobile stations communicating with base station 2b. Therefore, in this case, mobile station 1 works to avoid communication quality deterioration of the other mobile stations by suddenly lowering its own transmission power, that is, by sacrificing own communication quality.

In the case shown in FIG. 3c, mobile station 1 is communicating with base station 2a and when mobile station 1 is in a shadow of obstacle 32, the reception power of mobile station 1 is small as shown by the left side of curve 34b in FIG. 3d. When mobile station 1 moves and is off the shadow of obstacle 32, the reception power of mobile station 1 suddenly increases as shown by the right side of curve 34b in FIG. 3d and the transmission power of mobile station 1 is made to decrease suddenly but a good communication quality is kept between base station 2a and mobile station 1 and self-sacrifice does not occur.

Thus, there are two kinds of shadowing influences and they bring instability in communication system. The first exemplary embodiment of the present invention solves this shadowing problem as follows.

Referring to a flow chart shown in FIG. 2, when reception power measurement means 9 detects that the reception power of mobile station 1 suddenly increased (step 41), the power level of mobile station transmission signal 7 is lowered by transmission power control means 6 (step 42).

In the case in which the reception power of mobile station 1 suddenly increased, when pilot signal despread means 11 detects that a pilot signal level from communicating base station 2a does not suddenly increase (FIGs. 3a and 3b), mobile station 1 judges that mobile station 1 turned to a self-sacrifice state, detects a number to discriminate a base station at base station number detection means 21, generates a self-sacrifice information at self-sacrifice information generation means 22 and informs it to a base station which is possible to report (step 43 and 44).

A self-sacrifice information includes the number of base station which gave interference besides the information which self-sacrifice occured. When the pilot signal level from communicating base station 2a suddenly increases (FIGs. 3c and 3d), because mobile station 1 is not in a self-sacrifice state, the above procedure is not made (YES in step 43).

At base stations 2a and 2b, the self-sacrifice information transmitted from mobile station 1 is detected at self-sacrifice information detection means 23a or 23b. The detected self-sacrifice information is sent to mobile communication control equipment 3 and a carrier which is prohibited to use hereafter and its base station are designated (step 45). Prohibition-to-use carrier information 26 is transmitted to the base station concerned and at the base station 2a concerned, using carrier determination means 24a or 24b determines to prohibit or restrict the further use of the designated carrier (step 46). In the case of FIG. 3a, the carrier of base station 2b is supposed to be different from the carrier of base station 2a.

By exchanging prohibition-to-use carrier information 26 informed from mobile communication control equipment 3 between base stations, it can be prevented that many carriers are prohibited to use. Thus, it is possible to enhance the stability of the entire system by segregating the carriers according to the self-sacrifice history of the mobile station.

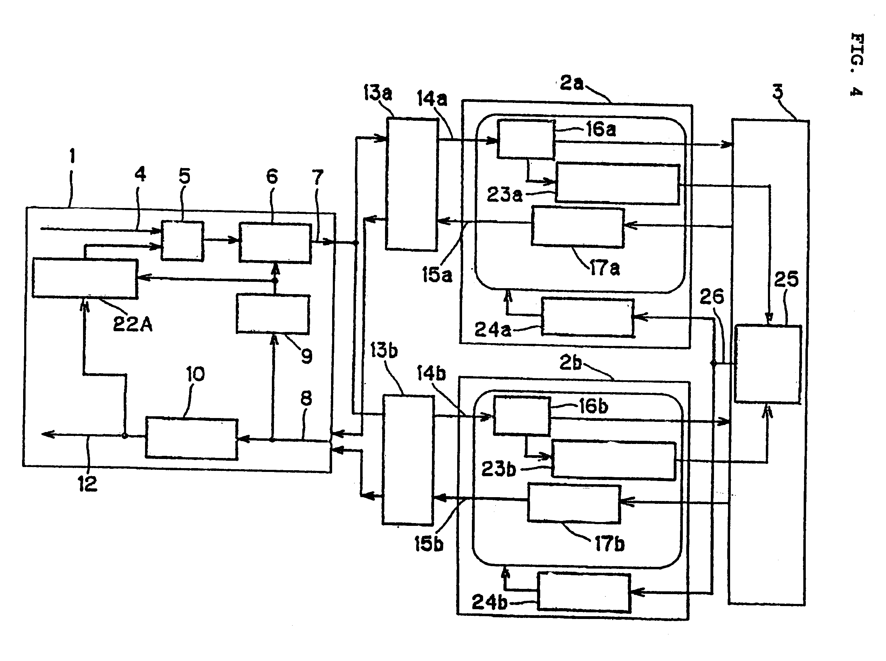

A block diagram of a mobile equipment, a base station and a mobile communication control equipment used in a CDMA system in accordance with a second exemplary embodiment of the present invention is shown in FIG. 4. The different points of the second exemplary embodiment from the first exemplary embodiment is that pilot signal despread means 11 and base station number detection means 21 are omitted from mobile station 1, the reception data outputted from data signal despread means 10 is inputted to self-sacrifice information generation means 22A and pilot signal generation means 18a and 18b and adder means 19a and 19b are omitted from base stations 2a and 2b, respectively.

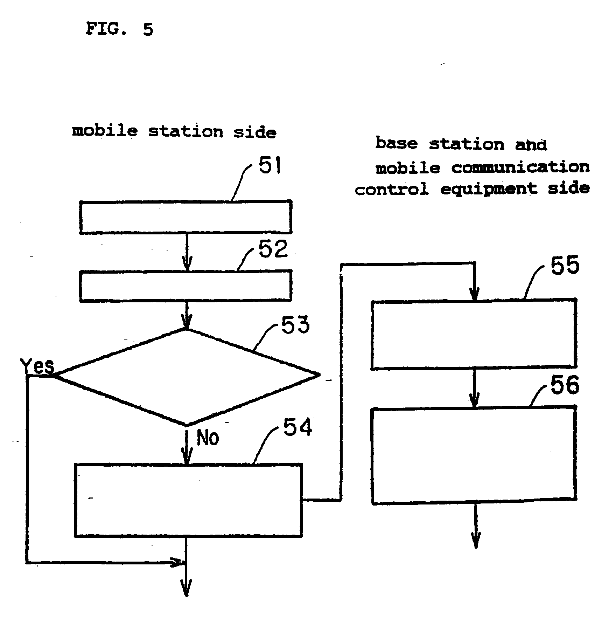

The performance of the CDMA system described above is explained below referring to a flow chart shown in FIG. 5 and illustrations of the reception power variation of mobile station 1 due to shadowing shown in FIGs. 3a-3d.

Reception power measurement means 9 detects that the reception power of mobile station 1 suddenly increased (step 51) and the power level of mobile station transmission signal 7 is lowered by power amplification means 6 (step 52).

In the case of FIGs. 3a and 3b, because the power from base station 2a which mobile station 1 is now communicating with does not increase, the quality (for example, bit error rate and frame error rate) of reception data 12 of mobile station 1 is not improved.

In the case of FIGs. 3c and 3d, because the power from base station 2a which mobile station 1 is now communicating with increases, the quality of reception data 12 of mobile station 1 is improved.

Therefore, the quality of reception data 12 of mobile station 1 can be monitored at self-sacrifice information generation means 22A and it can be judged if mobile station 1 became to self-sacrifice or not (step 53). The performances at steps 54, 55 and 56 are similar to the steps 44, 45 and 46, respectively and their explanations are omitted.

Thus, also in the second exemplary embodiment, it is possible to enhance the stability of the entire system by segregating the carriers according to the self-sacrifice history of the mobile station.

Thus, a CDMA system in accordance with an exemplary embodiment of the present invention can segregate the carriers by using self-sacrifice history of the mobile station and can prevent communication quality deterioration due to shadowing by providing with means to transmit an information that a mobile station sacrificed its own communication quality and by prohibiting or restricting the use of the carrier designated at the base station concerned.

The invention may be embodied in other specific form without departing from the spirit or essential characteristics thereof. The present embodiment is therefore to be considered in all respects as illustrative and not restrictive, the scope of the invention being indicated by the appended claims rather than by the foregoing description and all changes which come within the meaning and range of equivalence of the claims are therefore intended to be embraced therein.

## Claims

1. A code division multiple access communication system comprising:
a mobile station,
base stations, and
a mobile communication control equipment; and wherein
a plurality of carriers are allocated and
said mobile station comprises:
reception power measurement means for measuring the reception power of said mobile station;
pilot signal despread means for despreading said pilot signal;
base station number detection means for detecting the base station number according to the despreaded pilot signal; and
self-sacrifice information generation means for generating an information that said mobile station is in a self-sacrifice state according to the detected base station number and the output of said reception power measurement means;
said base station comprises:
means for generating a pilot signal; and
self-sacrifice information detection means for detecting self-sacrifice information transmitted from said mobile station; and
said mobile communication control equipment comprises:
means for generating an information to prohibit or restrict the use of a designated carrier at said base station according to the output of said self-sacrifice information detection means transmitted from said base station.

2. A code division multiple access communication system as recited in claim 1: wherein
a plurality of base stations are provided and
pilot signals transmitted from each base station have the same frequencies and spread codes and different phases.

3. A code division multiple access communication system as recited in claim 1: wherein
said mobile station further comprises:
power control means for controlling the transmission power according to the reception power received by reception power measurement means;
spread means for spreading the transmission data and the self-sacrifice information;
data signal despread means for despreading the received data signal.

4. A code division multiple access communication system as recited in claim 1: wherein
said base station further comprises:
despread means for despreading the signal transmitted from said mobile station;
data signal spread means for spreading the data to be transmitted to said mobile station;
adder means for adding the spread data from said data signal spread means and a pilot signal;
carrier determination means for determining a carrier to be used at said base station by an information to prohibit or restrict the use of the designated carrier from said mobile communication control equipment.

5. A code division multiple access communication system comprising:
a mobile station,
base stations, and
a mobile communication control equipment; and wherein
said mobile station comprises:
base station number detection means for detecting the base station number by despreading a pilot signal spread-transmitted from said base station;
self-sacrifice information generation means for generating an information indicating that said mobile station is in a self-sacrifice state according to the detected base station number and the reception power; and
spread means for spreading the transmission data and the self-sacrifice information; and
said base station comprises:
self-sacrifice information detection means for detecting a self-sacrifice information coming from said mobile station out of the information which despreads a signal from said mobile station;
carrier determination means for determining a carrier to be used at said base station by an information to prohibit or restrict the use of the designated carrier from said mobile communication control equipment; and
said mobile communication control equipment comprises:
means for generating an information to prohibit or restrict the use of the designated carrier at said base station according to the output of said self-sacrifice information detection means transmitted from said base station.

6. A code division multiple access communication system comprising:
a mobile station,
base stations, and
a mobile communication control equipment; and wherein
a plurality of carriers are allocated and
said mobile station comprises:
reception power measurement means for measuring the reception power; and
self-sacrifice information generation means for generating an information indicating that said mobile station is in a self-sacrifice state according to the quality of the reception data and the output of said reception power measurement means;
said base station comprises:
self-sacrifice information detection means for detecting a self-sacrifice information transmitted from said mobile station;
said mobile communication control equipment comprises:
means for generating an information to prohibit or restrict the use of the designated carrier at said base station according to the output of said self-sacrifice information detection means transmitted from said base station.

7. A code division multiple access communication system as recited in claim 6 comprising:
said mobile station further comprises:
power control means for controlling the transmission power according to the reception power which said reception power measurement means received;
data signal despread means for despreading a received data signal; and
spread means for spreading transmission data and said self-sacrifice information.

8. A code division multiple access communication system as recited in claim 6: wherein
said base station comprises:
despread means for despreading the signal transmitted from said mobile station;
data signal spread means for spreading the data to be transmitted to said mobile station; and
carrier determination means for determining a carrier to be used at said base station by an information to prohibit or restrict the use of the designated carrier from said mobile communication control equipment.

9. A code division multiple access communication system comprising:
a mobile station,
base stations, and
a mobile communication control equipment; and wherein
said mobile station comprises:
self-sacrifice information generation means for generating an information indicating that said mobile station is in a self-sacrifice state according to the reception data quality and the reception power; and
spread means for spreading the transmission data and the self-sacrifice information; and
said base station comprises:
self-sacrifice information detection means for detecting a self-sacrifice information coming from said mobile station out of the information which despreads a signal from said mobile station;
carrier determination means for determining a carrier to be used at said base station by an information to prohibit or restrict the use of the designated carrier from said mobile communication control equipment; and
said mobile communication control equipment comprises:
means for generating an information to prohibit or restrict the use of the designated carrier at said base station according to the output of said self-sacrifice information detection means transmitted from said base station.

10. A communication method in a.code division multiple access communication system comprising:
(a) a step to reduce the power level of a transmission signal of a mobile station, when the reception power at said mobile station suddenly increased;
(b) a step to detect whether the level of a pilot signal from a base station which said mobile station is now communicating with increased or not;
(c) a step to inform a self-sacrifice information to said base station, judging that said mobile station is in a self-sacrifice state, when the level of the pilot signal does not increase;
(d) a step to designate a carrier which said base station prohibits or restricts to use hereafter according to a received self-sacrifice information; and
(e) a step to prohibit or restrict the use of the carrier designated by a base station concerned.

11. A communication method in a code division multiple access communication system comprising:
(a) a step to reduce the power of a mobile station transmission signal, when the reception power at said mobile station suddenly increased;
(b) a step to detect whether the reception data quality of said mobile station was improved or not;
(c) a step to inform a self-sacrifice information to said base station, judging that said mobile station is in a self-sacrifice state, when the reception data quality was not improved;
(d) a step to designate a carrier which said base station prohibits or restricts to use hereafter according to a received self-sacrifice information; and
(e) a step to prohibit or restrict the use of the carrier designated by a base station concerned.
